# EUROPÄISCHE PATENTANMELDUNG

(11) **EP 3 693 078 A1**
(43) Veröffentlichungstag der Anmeldung: **12.08.2020**
(21) Anmeldenummer: 20152343.8
(22) Anmeldetag: 17.01.2020
(51) Int. Cl.: B01D 53/04, F25B 45/00

(54) **FÜLLSTANDSSENSOR**

(30) Priorität: 06.02.2019 DE 102019102917; 13.08.2019 DE 102019121766
(71) Anmelder: Vaillant GmbH, 42859 Remscheid (DE)
(72) Erfinder: Lingk, Tobias, 42799 Leichlingen (DE); Krampe-Zadler, Christof, 44628 Herne (DE); Spahn, Hans-Josef, 40699 Erkrath (DE); Szuder, Thomas-Friedrich, 51379 Leverkusen (DE)
(74) Vertreter: Popp, Carsten

(57) **Zusammenfassung**

Vorrichtung zur adsorptiven Abscheidung von gasförmigem Arbeitsfluid, welches aus einer in einem Innenraum betriebenen Kältekreisanlage austritt, wobei ein Adsorber mit einer durchströmbaren Aktivkohleschüttung sowie einem Gaseinlass und einem Gasauslass vorgesehen ist, der Adsorber ein Fördergebläse aufweist, am Gaseinlass einen Gasdetektor aufweist, und in der Aktivkohleschüttung eine Vielzahl von Beladungsmessstellen angeordnet ist, mit denen der Beladungszustand und deren zeitliche Änderung über die Schüttungslänge ermittelt wird.

## Beschreibung

Die Erfindung betrifft die Erkennung einer Beladung einer Aktivkohleschüttung, welche in einem Adsorber dazu verwendet wird, leckagebedingt aus einer Kältemaschine ausgetretenes entzündliches Arbeitsfluid zu adsorbieren. Eine solche Aktivkohleschüttung wird eingesetzt als Sicherheit vor einer Kontamination von beispielsweise R290 in Gehäusen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden und anderen Einrichtungen, wie Fahrzeugen, Kühlhäusern, medizinischen Apparaten und Industrieanlagen gebräuchlich sind. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen FKW bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes an FKW entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014.

Die auftretenden Probleme bei der Sicherheitsauslegung solcher Anlagen werden in der WO 2015/032905 A1 anschaulich beschrieben. So liegt die untere Zündgrenze von Propan, welches den Hauptbestandteil des Arbeitsfluids R290 bildet, als Arbeitsfluid etwa bei 1,7 Volumenprozent in Luft, was 38 g/m³ in Luft entspricht.

Sofern der Kälteprozess in einem ihn umgebenden, hermetisch abgeschlossenen, ansonsten aber luftgefüllten Raum mit dem Arbeitsfluid R290 durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die R290-Erkennung durch die Sensoren selbst das Explosionsrisiko erheblich verschärft, ausgenommen hiervon sind Infrarotsensoren. R290 ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel wird unter anderen vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die DE 195 25 064 C1 beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem sorbierenden Stoff gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Sorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Sorptionsmittel zwingen. Auch eine doppelwandige Ausführungsform, bei der das Sorptionsmittel im Doppelmantel angeordnet ist, ist möglich. Am Ausgang des mit dem sorbierenden Stoffes gefüllten Raumes zur Umgebung hin kann eine Messeinrichtung für Kältemittel vorgesehen werden.

Aktivkohle ist seit langem bekannt als Abscheidemittel für Verunreinigungen in Gasen und Flüssigkeiten. Sie wird aus Kohle gewonnen und mittels Chemikalienbehandlung und überhitztem Wasserdampf aktiviert. Im Handel ist sie in verschiedenen Formen erhältlich, üblich sind Pulver, Pellets, Gewebe, Schüttungen, gesinterte Fest- und Formkörper und viele mehr, wobei in vielen Anwendungsfällen Trägerstrukturen verwendet werden. Die Abscheidewirkung wird erzielt durch eine sehr große innere Oberfläche sowie durch gezielt eingebrachte Imprägnierungen, die bestimmte Verunreinigungen binden.

Apparativ üblich sind durchströmte Kartuschen sowie Festbetten mit Rückhaltevorrichtungen, die Aktivkohle in den oben genannten Formen enthalten. Die Auslegung solcher Apparate erfolgt, indem man die Beladungskapazität der Aktivkohle für jeden der abzuscheidenden Stoffe bestimmt, wobei die Beladungskapazität in der Regel stark temperaturabhängig ist, und die Durchströmungsmenge bestimmt. Hierbei ergibt sich im Idealfall ein Adsorptionsgleichgewicht und eine Durchbruchsfront zwischen beladenem und noch unbeladenem Adsorbens. Das gilt vor allem für Abscheidungsvorgänge aus der Gasphase.

Leider ist ein solcher Idealfall in der Praxis selten. So kennt man die Durchströmungsmenge des betreffenden Stoffes oft nicht, vor allem dann, wenn die Aktivkohle nur zur Sicherung dient und keine regelhafte Beladung erfolgen soll, oder wenn sich die Temperatur und damit die Beladungskapazität plötzlich stark ändert, was allein schon aufgrund der freiwerdenden Adsorpionswärme geschehen kann, oder wenn verschiedene abzuscheidende Stoffe sich gegenseitig verdrängen. Man kann also den Beladungszustand nicht in herkömmlicher Weise aus BET-Kurven ableiten. Außerdem hat über längere Zeiträume oft keine Information darüber, ob in derartigen Adsorptionsbetten eine allmähliche Degradation mit der Folge einer Abnahme der Beladungskapazität stattgefunden hat.

Praktisch muss man also die Konzentration des abzuscheidenden Stoffes am Ausgang des Adsorbers messen, um zu wissen, ob oder wann der Adsorber beladen ist und man kann nicht einfach erkennen, wie weit der Ladezustand innerhalb des Adsorbers bereits fortgeschritten ist. Das ist insofern unbefriedigend, als man möglicherweise eine gewisse Vorlaufzeit für einen Filterwechsel benötigt und abschätzen möchte, wann der Filterwechsel erforderlich wird, und zwar bevor der abzuscheidende Stoff durchbricht.

Die Aufgabe der Erfindung ist daher, eine adsorptive Abscheidevorrichtung für austretendes Arbeitsfluid aus einem Kältekreis, wie beispielsweise einer in einem Gebäude aufgestellten Wärmepumpe, bereitzustellen, mit der der Beladungszustand und die zeitliche Beladungszustandsänderung eines Adsorbens in einer Adsorbensschüttung kontinuierlich oder diskontinuierlich festgestellt werden kann.

Die Erfindung löst diese Aufgabe durch eine Vorrichtung zur adsorptiven Abscheidung von gasförmigem Arbeitsfluid, welches aus einer in einem Innenraum betriebenen Kältekreisanlage austritt, wobei
- ein Adsorber mit einer durchströmbaren Aktivkohleschüttung sowie einem Gaseinlass und einem Gasauslass vorgesehen ist,
- der Adsorber ein Fördergebläse aufweist,
- am Gaseinlass einen Gasdetektor aufweist,
- in der Aktivkohleschüttung eine Vielzahl von Beladungsmessstellen angeordnet ist, mit denen der Beladungszustand und deren zeitliche Änderung über die Schüttungslänge ermittelt wird.

In einer weiteren Ausgestaltung wird vorgesehen, dass Gaseinlass und Gasauslass des Adsorbers durch feste Leitungen mit einem Kapselgehäuse einer Kältekreisanlage verbunden sind.

In einer weiteren Ausgestaltung wird vorgesehen, dass Gaseinlass und Gasauslass des Adsorbers durch flexible Leitungen mit einem Kapselgehäuse einer Kältekreisanlage verbunden sind. Das hat den Vorteil, dass der Adsorber als mobiles Gerät ausgeführt sein kann.

In einer weiteren Ausgestaltung wird vorgesehen, dass Gaseinlass und Gasauslass des Adsorbers nicht durch Leitungen mit einem Kapselgehäuse einer Kältekreisanlage verbunden sind. Das Gas-Luftgemisch strömt dabei frei durch den Aufstellungsraum.

In einer weiteren Ausgestaltung wird vorgesehen, dass am Gasauslass des Adsorbers ein Gasdetektor angeordnet ist. Dadurch kann sichergestellt sein, dass ein Durchbruch durch ein beladenes Adsorberbett auch dann erkannt wird, wenn der Adsorber noch nicht voll beladen ist.

In einer weiteren Ausgestaltung wird vorgesehen, dass eine Auswertungseinheit die Messergebnisse der Beladungsmessstellen auswertet und mittels einer Anzeigevorrichtung den Grad der Beladung anzeigt.

Mit der Vorrichtung ist ein spezielles Verfahren zum Betrieb möglich. Hierbei wird zwischen einem normalen Betreib im störungsfreien Zustand und einem Betrieb im Leckagefall unterschieden. In diesem Verfahren wird vorgesehen, dass zum gekoppelten Betrieb des Adsorbers und einer in einem Innenraum betriebenen Kältekreisanlage ein Gasstrom aus einem Innenraum, in welchem eine Kältekreisanlage betrieben wird, durch diesen Adsorber geleitet wird, wobei am Eintritt des Adsorbers ermittelt wird, ob sich brennbare Gasbestandteile in der zuströmenden Luft befinden und der Beladungszustand der im Adsorber befindlichen Aktivkohleschüttung kontinuierlich gemessen und angezeigt wird.

Weiterhin kann vorgesehen werden, dass sofern die Gasdetektion am Eingang des Adsorbers keine brennbaren Gasbestandteile in der zuströmenden Luft erkennt, die Förderleistung des Fördergebläses reduziert wird und sofern die Gasdetektion am Eingang des Adsorbers brennbare Gasbestandteile in der zuströmenden Luft erkennt, die Förderleistung des Fördergebläses gesteigert wird.

Selbstverständlich kann der Adsorber, wenn er nicht in einem geschlossenen Luftkreislauf mit der Wärmepumpe eingebunden ist, auch mit üblichen Luftverbesserungsvorrichtungen ausgestattet und betrieben werden, etwa mit Pollenfiltern, Ionisatoren, Desodorierern und Staubpartikelfiltern zur Verbesserung der Raumluft.

Die Erfindung umfasst auch Verwendungen. So kann speziell eine Verwendung eines solchen Adsorbers zum gekoppelten Betrieb mit einer in einem Innenraum betriebenen Wärmepumpe als Kältekreisanlage vorgesehen werden. Dies betrifft vor allem eine Wärmepumpe, die mit einem entzündlichen Arbeitsfluid betrieben wird, welches in einem geschlossenen, hermetisch dichten Arbeitsfluidumlauf geführt wird, die Wärmepumpe aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein geschlossenes Gehäuse, bestehend aus einem äußeren Gehäuseteil und einem inneren gekapselten Gehäuseteil, welches alle am geschlossenen Arbeitsfluidumlauf angeschlossenen Einrichtungen umfasst und weitere Einrichtungen umfassen kann,
- sowie einer Zuströmöffnung und einer Abströmöffnung des gekapselten Gehäuseteils direkt in den Aufstellungsraum oder den Adsorber ohne Verbindung in den äußeren Gehäuseteil.

Als linksdrehender Kreisprozess dient in den meisten Fällen ein Clausius-Rankine-Prozess, der mit R290 betrieben wird. Im Adsorber wird hierbei das Adsorbens Aktivkohle verwendet. Als Wärmeübertragerfluide sind hier alle gasförmigen oder flüssigen Medien zu verstehen, mit denen Wärme übertragen wird, also etwa Luft, Wasser, Sole, Wärmeträgeröle oder dergleichen.

Die Erfindung wird nachfolgend anhand von 7 Prinzipskizzen näher erläutert. Hierbei zeigen:
- Fig. 1:: einen Adsorber mit Beladungsmessstellen,
- Fig. 2:: eine erste räumliche Anordnungsvariante des Adsorbers und einer Wärmepumpe,
- Fig. 3:: eine zweite räumliche Anordnungsvariante des Adsorbers und einer Wärmepumpe,
- Fig. 4:: eine dritte räumliche Anordnungsvariante des Adsorbers und einer Wärmepumpe,
- Fig. 5:: ein erstes Ausführungsbeispiel für eine Beladungsmessstelle,
- Fig. 6:: ein zweites Ausführungsbeispiel für eine Beladungsmessstelle,
- Fig. 7:: eine Variante des zweiten Ausführungsbeispiels für eine Beladungsmessstelle.

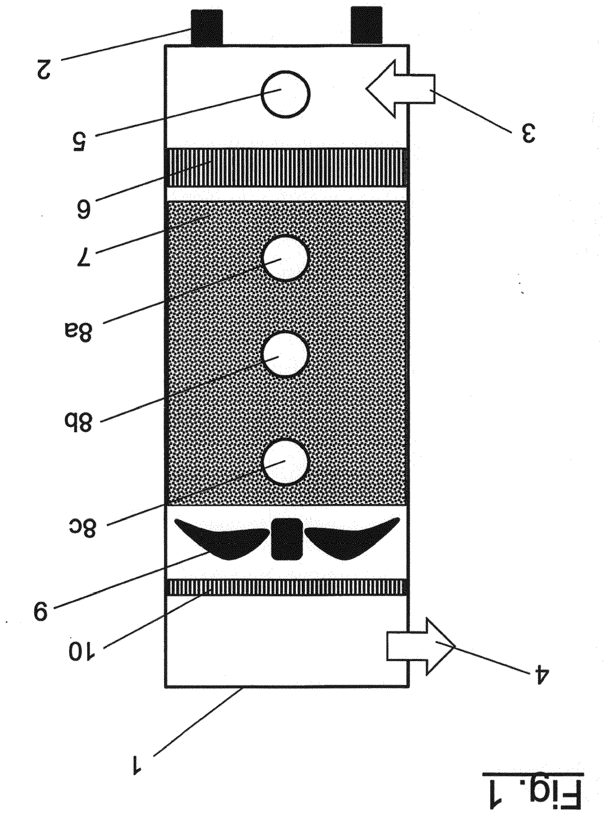

Fig. 1 zeigt einen Adsorber 1, der mobil auf Füßen 2 aufgestellt ist und der einen Gaseinlass 3 und einen Gasauslass 4 aufweist. In seinem Inneren befinden sich ein Gassensor 5, der sowohl als Detektor als auch als Analysator für die Konzentration von Propan ausgeführt ist, ein Strömungsgleichrichter 6, eine Aktivkohleschüttung 7, Beladungsmessstellen 8a, 8b und 8c in unterschiedlichen Höhen der Aktivkohleschüttung, ein Fördergebläse 9 und ein Strömungsgitter 10.

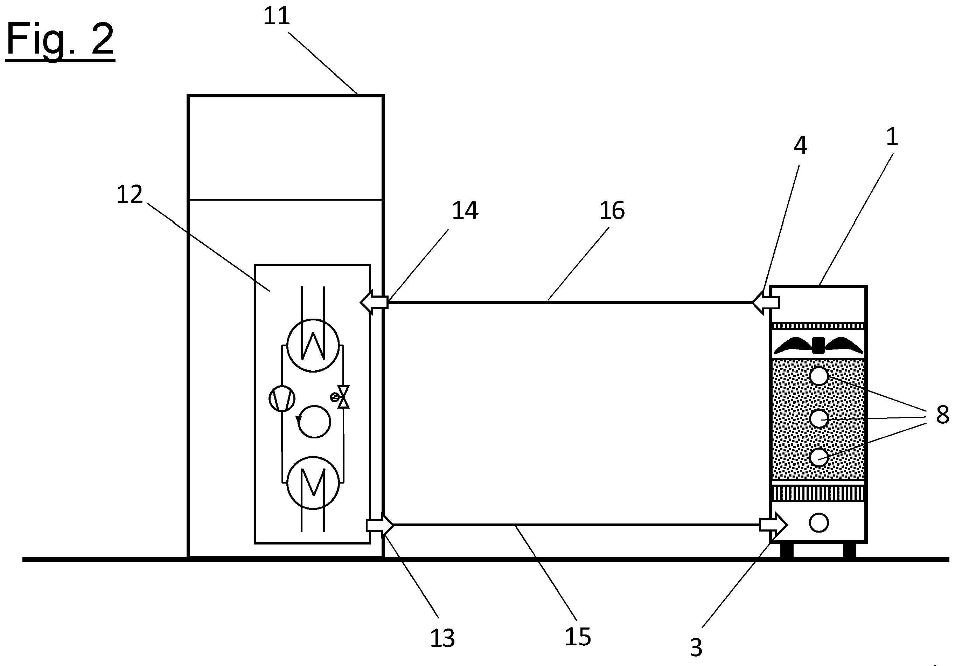

Fig. 2 zeigt den Adsorber 1 in Verbindung mit einer Wärmepumpe 11, innerhalb der ein Kältekreis mit einer Kältekreiseinhausung 12 angeordnet ist. Diese Kältekreiseinhausung verfügt direkt über einen Kältekreiseinhausungseinlass 13 und einen Kältekreiseinhausungsauslass 14, die direkt aus der Wärmepumpe 12 hinausführen und keine Verbindung zu den sonstigen Einrichtungen der Wärmepumpe 11, wie etwa dem Heizkreis, der Warmwasserbereitung oder der Steuerung aufweisen. Diese beiden Auslässe aus der Kältekreiseinhausung 12 sind mit einer festen Adsorberzuleitung 15 und einer festen Adsorberrückleitung 16 mit dem Adsorber 1 verbunden.

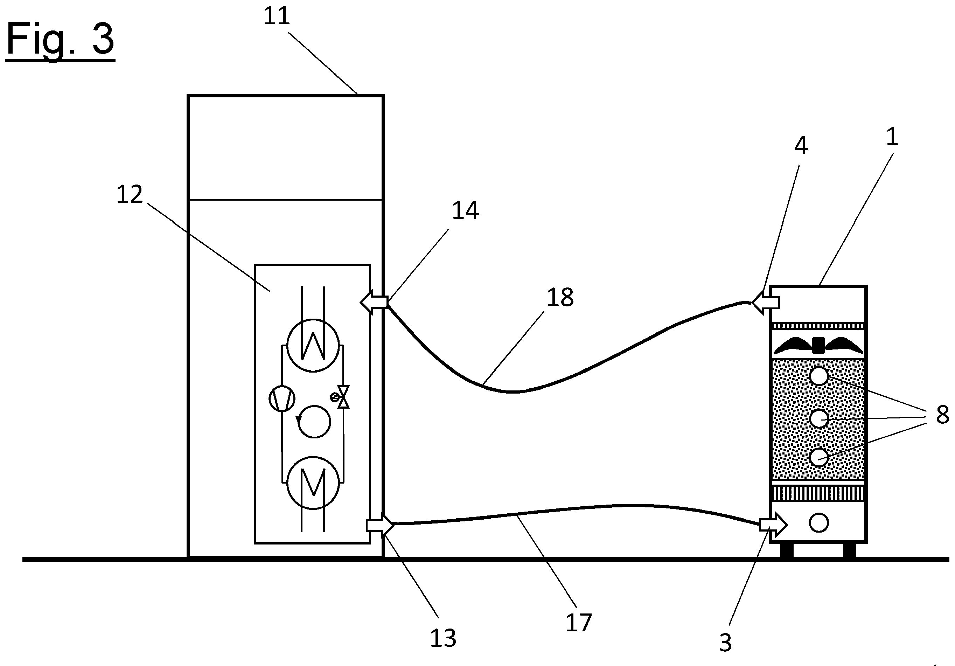

Fig. 3 zeigt die gleiche Anordnung wie in Fig. 2 mit flexiblen Leitungen. Die beiden Auslässe aus der Kältekreiseinhausung 12 sind mit einer flexiblen Adsorberzuleitung 17 und einer flexiblen Adsorberrückleitung 18 mit dem Adsorber 1 verbunden.

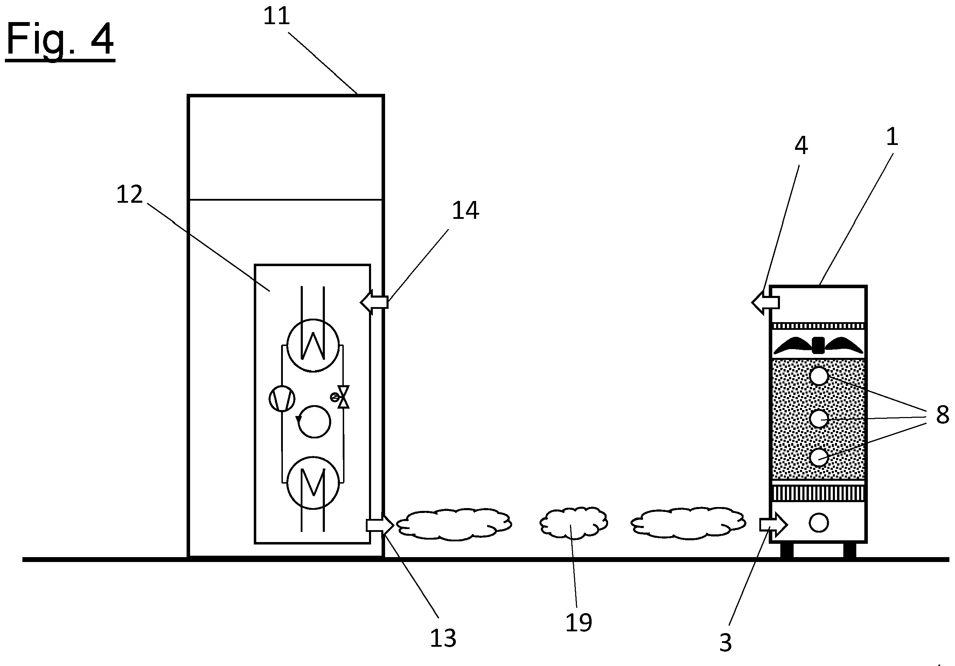

Fig. 4 zeigt eine ähnliche Anordnung wie in Fig. 2 und 3, jedoch ohne Leitungen. Ein aus dem Kältekreiseinhausungsauslass 14 austretender Luftstrom 19 gelangt über die Raumluft in den Adsorber 1. Nicht dargestellt ist die Möglichkeit, in diesem Fall nur die Adsorberrückleitung (16, 18) in die Kältekreiseinhausung 12 zu führen, um die Kältekreiseinhausung 12 ständig zu spülen. Die in den Figuren 2 bis 4 dargestellten Anbindungsmöglichkeiten sind auch kombinierbar und können bei Bedarf auch mehrere Kältekreise bedienen.

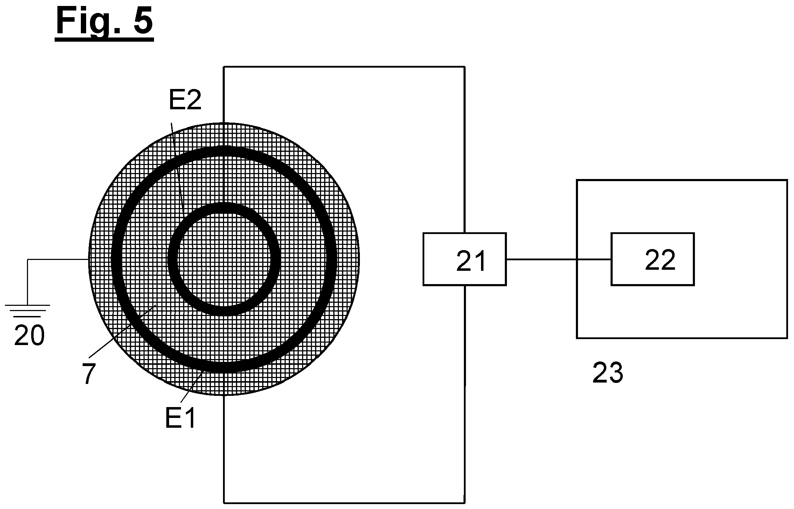

Die Figuren 5 bis 7 zeigen dem Fachmann Möglichkeiten, wie er die Beladungsmessstellen ausführen kann, die Beladungsmessstellen selbst sind jedoch nicht Gegenstand der Erfindung.

Fig. 5 zeigt einen Schnitt durch eine Ebene der Adsorbensschüttung 7 mit zwei darin angeordneten konzentrischen Elektroden E1 und E2. Der Adsorber ist dabei aus nichtleitendem Material gefertigt und mit einer Erdung 20 versehen. Die Elektroden werden von einer Wechselstromquelle 21 mit einem hochfrequenten Wechselstrom beschickt und es wird die Impedanz gemessen. Diese Impedanz wird durch einen Frequenzzähler 22 ermittelt und in einem MCU 23 ausgewertet.

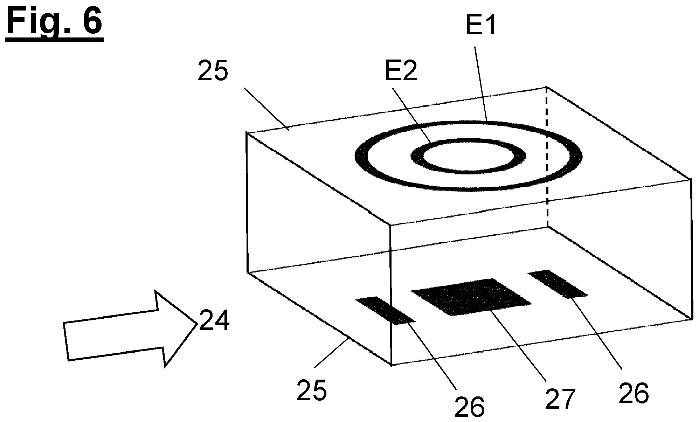

Fig. 6 zeigt eine alternative Beladungsmessstelle, bei der Messung der elektrischen Impedanz parallel zu einer Messung der thermischen Impedanz erfolgt. Die Anströmung 24 der möglicherweise beladenen Luft erfolgt auf Platinen 25, von denen ein mit elektrischen Heizwiderständen 26 und einem Thermosensor 27 bestückt ist und deren andere Platine 25 eine elektrische Impedanzmessung mit den Elektroden E1 und E2 durchführt.

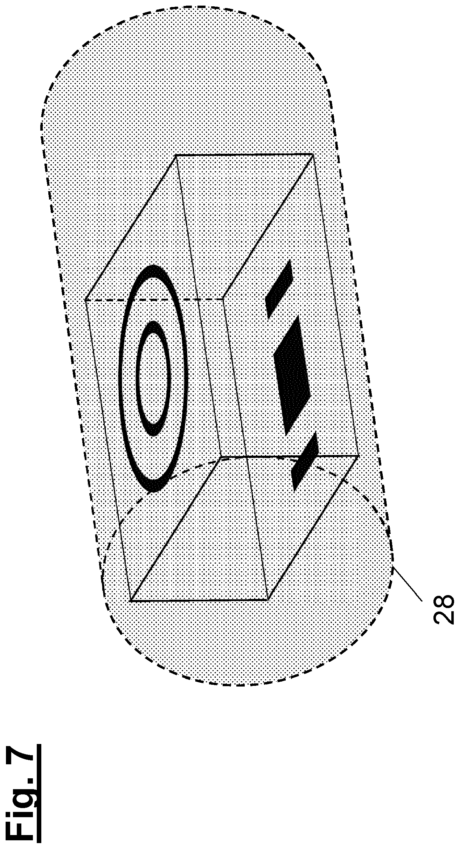

Fig. 7 zeigt eine Ausführungsform der in Fig. 6 ausgeführten Beladungsmessstellenvariante, bei der die Platinen in einer miniaturisierten Form in ein Aktivkohlepellet eingebracht worden sind.

### Bezugszeichenliste

- E1:: Elektrode
- E2:: Elektrode
- 1:: Adsorber
- 2:: Standfuß
- 3:: Gaseinlass
- 4:: Gasauslass
- 5:: Gassensor
- 6:: Strömungsgleichrichter
- 7:: Aktivkohleschüttung
- 8, 8a, 8b, 8c:: Beladungsmessstelle
- 9:: Fördergebläse
- 10:: Strömungsgitter
- 11:: Wärmepumpe
- 12:: Kältekreiseinhausung
- 13:: Kältekreiseinhausungseinlass
- 14:: Kältekreiseinhausungsauslass
- 15:: feste Adsorberzuleitung
- 16:: feste Adsorberrückleitung
- 17:: flexible Adsorberzuleitung
- 18:: flexible Adsorberrückleitung
- 19:: Luftstrom
- 20:: Erdung
- 21:: Wechselstromquelle
- 22:: Frequenzzähler
- 23:: MCU
- 24:: Anströmung
- 25:: Platine
- 26:: Heizwiderstand
- 27:: Thermosensor
- 28:: Aktivkohlepellet

## Patentansprüche

1. Vorrichtung zur adsorptiven Abscheidung von gasförmigem Arbeitsfluid, welches aus einer in einem Innenraum betriebenen Kältekreisanlage austritt, wobei
- ein Adsorber (1) mit einer durchströmbaren Aktivkohleschüttung (7) sowie einem Gaseinlass (3) und einem Gasauslass (4) vorgesehen ist,
- der Adsorber (1) ein Fördergebläse (9) aufweist,
- am Gaseinlass (3) einen Gasdetektor (5) aufweist,
**dadurch gekennzeichnet, dass**
- in der Aktivkohleschüttung (7) eine Vielzahl von Beladungsmessstellen (8) angeordnet ist, mit denen der Beladungszustand und deren zeitliche Änderung über die Schüttungslänge ermittelt wird.

2. Vorrichtung nach Anspruch 1, **dadurch gekennzeichnet, dass** Gaseinlass (3) und Gasauslass (4) des Adsorbers (1) durch feste Leitungen (15, 16) mit einem Kapselgehäuse (12) einer Kältekreisanlage verbunden sind.

3. Vorrichtung nach Anspruch 1, **dadurch gekennzeichnet, dass** Gaseinlass (3) und Gasauslass (4) des Adsorbers (1) durch flexible Leitungen (17, 18) mit einem Kapselgehäuse (12) einer Kältekreisanlage verbunden sind.

4. Vorrichtung nach Anspruch 1, **dadurch gekennzeichnet, dass** Gaseinlass (3) und Gasauslass (4) des Adsorbers (1) nicht durch Leitungen mit einem Kapselgehäuse (12) einer Kältekreisanlage verbunden sind.

5. Vorrichtung nach einem der Ansprüche 1 bis 4, **dadurch gekennzeichnet, dass** am Gasauslass (4) ein Gasdetektor angeordnet ist.

6. Vorrichtung nach einem der Ansprüche 1 bis 5, **dadurch gekennzeichnet, dass** eine Auswertungseinheit die Messergebnisse der Beladungsmessstellen (8) auswertet und mittels einer Anzeigevorrichtung den Grad der Beladung anzeigt.

7. Verfahren zum gekoppelten Betrieb eines Adsorbers gemäß einem der Ansprüche 1 bis 6 und einer in einem Innenraum betriebenen Kältekreisanlage (11), **dadurch gekennzeichnet, dass** ein Gasstrom aus einem Innenraum, in welchem eine Kältekreisanlage betrieben wird, durch einen Adsorber (1) gemäß einem der Ansprüche 1 bis 6 geleitet wird, wobei am Eintritt des Adsorbers (1) ermittelt wird, ob sich brennbare Gasbestandteile in der zuströmenden Luft befinden und der Beladungszustand der im Adsorber (1) befindlichen Aktivkohleschüttung (7) kontinuierlich gemessen und angezeigt wird.

8. Verfahren nach Anspruch 7, **dadurch gekennzeichnet, dass** sofern die Gasdetektion am Eingang des Adsorbers (1) keine brennbaren Gasbestandteile in der zuströmenden Luft erkennt, die Förderleistung des Fördergebläses (9) reduziert wird und sofern die Gasdetektion am Eingang des Adsorbers (1) brennbare Gasbestandteile in der zuströmenden Luft erkennt, die Förderleistung des Fördergebläses (9) gesteigert wird.

9. Verwendung eines Adsorbers (1), entsprechend einem der vorangegangenen Ansprüche, zum gekoppelten Betrieb mit einer in einem Innenraum betriebenen Wärmepumpe (11) als Kältekreisanlage.

10. Verwendung nach Anspruch 9 mit einer Wärmepumpe (11), die mit einem entzündlichen Arbeitsfluid betrieben wird, welches in einem geschlossenen, hermetisch dichten Arbeitsfluidumlauf geführt wird, die Wärmepumpe (11) aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein geschlossenes Gehäuse, bestehend aus einem äußeren Gehäuseteil und einem inneren gekapselten Gehäuseteil (12), welches alle am geschlossenen Arbeitsfluidumlauf angeschlossenen Einrichtungen umfasst und weitere Einrichtungen umfassen kann,
- sowie einer Zuströmöffnung (13) und einer Abströmöffnung (14) des gekapselten Gehäuseteils (12) direkt in den Aufstellungsraum oder den Adsorber (1) ohne Verbindung in den äußeren Gehäuseteil.
